Europäisches Patentamt

European Patent Office

Office européen des brevets

(19)

(11) Numéro de publication: **0 056 925**

**A1**

(12) **DEMANDE DE BREVET EUROPEEN**

(21) Numéro de dépôt: **81630085.9**

(22) Date de dépôt: **29.12.81**

(51) Int. Cl.³: **G 01 B 15/02**
**G 21 F 5/02**

(30) Priorité: **23.01.81 LU 83083**

(43) Date de publication de la demande:
**04.08.82 Bulletin 82/31**

(84) Etats contractants désignés:
**AT BE CH DE FR GB IT LI NL SE**

(71) Demandeur: **ARBED S.A.**
**Avenue de la Liberté 19**
**L-2930 Luxembourg(LU)**

(72) Inventeur: **Junck, Guy**
**41 rue Batty Weber**
**L-4346 Esch/Alzette(LU)**

(74) Mandataire: **Neyen, René**
**Administration Centrale de l'Arbed Case postale 1802**
**L-2930 Luxembourg(LU)**

(54) **Installation de mesure par gammamétrie.**

(57) Une installation de mesure par gammamétrie, notamment en rapport avec le contrôle de l'épaisseur de produits laminés, prévoit qu'un bloc (1) mobile autour d'un axe (2) excentrique est équipé de plusieurs sources (3) de rayonnement radioactif qui sont disposées sur la circonférence dudit bloc, ce dernier étant logé dans un caisson (4) de base, surmonté d'un capot (5) de protection qui comporte des orifices (6) pour livrer passage au rayonnement, que l'axe (22) est accouplé à un servo-moteur (7) capable d'entraîner le bloc (1) en position déterminée des sources (3) par rapport à l'orifice (6), et que des détecteurs (9) de rayonnement sont disposés en face des orifices (6) à une distance suffisante pour permettre d'interposer le produit à scruter.

L'ensemble block (1)/ caisson (4)/ capot (5) est disposé entre deux rouleaux (10) d'un train qui déplace un produit (11) laminé

Le bloc (1) présente dans le plan perpendiculaire à l'axe (2) la forme d'un secteur de cercle, dont l'arc est de préférence inférieur à 180°; l'axe (2) correspondant au centre dudit cercle est disposé en-dessous des bords supérieurs du caisson.

./...

FIG 1

## Installation de mesure par gammamétrie

La présente invention concerne une installation de mesure par gammamétrie, notamment de mesure en rapport avec le contrôle de l'épaisseur de produits laminés.

Il est connu d'avoir recours à la gammamétrie pour mesurer l'épaisseur des produits laminés les plus divers. Or les responsables des unités de production où des mesures gammamétriques seraient à envisager, hésitent souvent avant de se lancer dans la pratique de ce mode analytique et ceci avant tout pour des raisons de sécurité.

Le but de la présente invention était de proposer une installation de mesure par gammamétrie répondant d'une part aux besoins analytiques qui existent dans les unités de production en question, en permettant notamment l'utilisation de plusieures sources radioactives de puissances différentes et qui permettent d'autre part un travail de contrôle exempt de risques pour l'opérateur.

Ce but est atteint par l'installation suivant l'invention qui prévoit notamment qu'un bloc (1) mobile autour d'un axe (2) excentrique est équipé de plusieures sources (3) de rayonnement radioactif qui sont disposées sur la circonférence dudit bloc, ce dernier étant logé dans un caisson (4) de base, surmonté d'un capot (5) de protection qui comporte des orifices (6) pour livrer passage au rayonnement, que l'axe (2) est accouplé à un servo-moteur (7) capable d'entraîner le bloc (1) en position déterminée des sources (3) par rapport à l'orifice (6) et que des détecteurs (9) de rayonnement sont disposés en face des orifices (6) à une distance suffisante pour permettre d'interposer le produit à scruter.

Comme on peut le constater, le bloc est escamotable dans le creux du caisson et il reste excamoté tant qu'il n'est pas sollicité par action du servo-moteur. Ainsi en cas de repos, lorsqu'il n'y a pas de travail analytique à effectuer, il suffit de débrancher le système servo-moteur, pour assurer que le bloc bascule dans le creux du caisson, étant donné qu'il est mobile autour de son axe et que les sources

radioactives se trouvent protégées dans leur blindage.

En l'absence d'action excercée par le servo-moteur, ce qui peut également se présenter en cas de panne d'électricité, tout risque d'accident est écarté, étant donné que le bloc s'excamote automatiquement, par sa seule gravité.

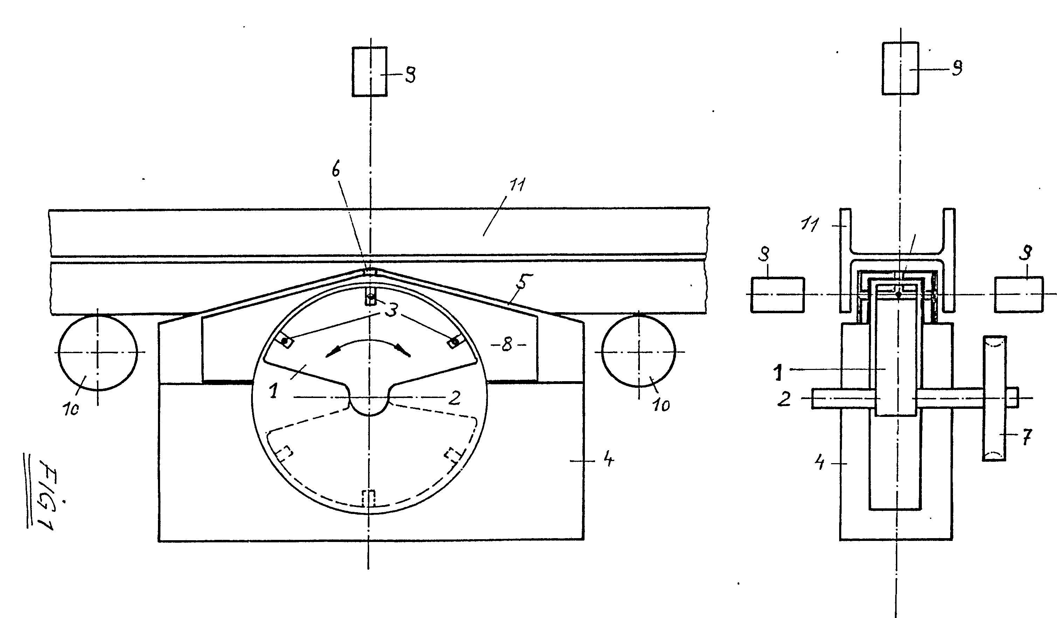

D'autres caractéristiques et avantages ressortiront de la description du dessin qui représente de manière non-limitative une forme d'exécution possible de l'installation suivant l'invention.

On distingue le bloc (1) qui présente le plan perpendiculaire à son axe (2), la forme d'un secteur de cercle, dont l'arc est inférieur à 180°. Grâce à cette particularité il est assuré que la position normale du bloc non-sollicité par une force quelconque, est la position basse, représentée en pointillé. Les sources (3) sont disposées le long du pourtour du bloc. Elles sont utilement de puissances différentes. L'axe (2) correspond sensiblement au centre du secteur de cercle délimité par le bloc.

On constate que l'axe (2) est utilement disposé en-dessous des bords supérieurs du caisson (4), si bien qu'en cas de basculement, le bloc est totalement immergé dans le caisson (4).

Le capot (5) du protection comporte des orifices (6). En réglant les servo-moteur (7) on arrive à disposer le bloc (1) de manière adéquate pour assurer qu'une source (3) se trouve exactement en face de l'orifice (6) voulu, si bien que l'on peut diriger un rayonnement de puissance déterminée dans une direction déterminée elle-aussi.

Il est bien entendu que des détecteurs (9) de rayonnement sont disposés de manière fixe en face des orifices (6).

Une autre particularité de l'installation suivant l'invention consiste en ce que le capot (5) de protection qui délimite une chambre (8) contient utilement un fluide de refroidissement qui participe à la protection anti-rayonnement en absorbant une partie de celui-ci.

0056925

Comme on peut le constater, l'installation.peut facilement être disposée entre deux rouleaux (10) d'un train qui déplace un produit laminé (11). Dans la disposition représentée les axes des rouleaux (10)
sont parallèles à l'axe (2) du bloc (1).

Il est bien entendu que l'on utilisera un système électronique de
gestion et de réglage de l'installation; p. ex. un microprocesseur
adéquat auquel sont raccordées les commandes du servo-moteur (7)
ainsi que les détecteurs (9).

Les résultats des mesures fournissent des informations relatives soit
à la section du produit (épaisseurs, hauteurs, largeurs, section, symétrie), soit au degré de régularité linéaire en suivant une trace
prédéterminée.

Les informations recueillies par les capteurs de mesure sont reconstituées dans le microprocesseur et exploitées en contrôle de section, de dimensions ou de défauts du produit. De même il devient
possible de calculer le poids métrique resp. le poids total du produit laminé. Ces grandeurs mesurées et calculées sont comparées à
celles d'un produit de référence et toute variation par rapport à
celui-ci est signalée à l'opérateur et/ou introduite dans le circuit
de régulation dynamique du train de laminoir.

Le microprocesseur peut recevoir en plus les signaux suivants:
cadence du train, température du produit, longueur du produit.

Après épuration ces signaux sont traités par le micro-système équipé
des moyens de dialogue et d'édition usuels.

Le microsystème peut ainsi calculer les dimensions, la section,
l'envergure des défauts, la symétrie, le poids métrique et le poids
total du produit inspecté. Tout écart par rapport à la référence est
enregistré, signalé à l'opérateur et le cas échéant introduit dans la
boucle de régulation dynamique du train.

Revendications

1. Installation de mesure par gammamétrie notamment en rapport avec le contrôle de l'épaisseur de produits laminés, caractérisée en ce qu'un bloc (1) mobile autour d'un axe (2) excentrique est équipé de plusieures sources (3) de rayonnement radioactif qui sont disposées sur la circonférence dudit bloc, ce dernier étant logé dans un caisson (4) de base, surmonté d'un capot (5) de protection qui comporte des orifices (6) pour livrer passage au rayonnement, que l'axe (2) est accouplé à un servo-moteur (7) capable d'entraîner le bloc (1) en position déterminée des sources (3) par rapport à l'orifice (6), et que des détecteurs (9) de rayonnement sont disposés en face des orifices (6) à une distance suffisante pour permettre d'interposer le produit à scruter.

2. Installation suivant la revendication 1, caractérisée en ce que l'ensemble bloc (1)/ caisson (4)/ capot (5) est disposé entre deux rouleaux (10) d'un train qui déplace un produit (11) laminé; les axes des rouleaux (10) étant parallèles à l'axe (2) du bloc (1).

3. Installation suivant les revendications 1 et 2, caractérisée en ce que le bloc (1) présente dans le plan perpendiculaire à l'axe (2) la forme d'un secteur de cercle, dont l'arc est de préférence inférieur à 180°, l'axe (2) correspondant au centre dudit cercle.

4. Installation suivant les revendications 1-3, caractérisée en ce que l'axe (2) est disposé en-dessous des bords supérieurs du caisson.

5. Installation suivant les revendications 1-4, caractérisée en ce que le capot (5) de protection délimite une chambre (8) où circule un fluide de refroidissement et d'absorbtion de rayonnement.

FIG 1

1/1

0056925

**0056925**

Numéro de la demande

**Office européen**
**des brevets**

**RAPPORT DE RECHERCHE EUROPEENNE**

EP 81 63 0085.9

## DOCUMENTS CONSIDERES COMME PERTINENTS

| Catégorie | Citation du document avec indication, en cas de besoin, des parties pertinentes | Revendication concernee |
|---|---|---|
| Y | US - A - 4 140 906 (SEAMAN NUCLEAR CORP.)<br>* colonne 2, lignes 35 à 47 *<br>-- | 1,4,5 |
| Y | Patent Abstracts of Japan<br>Vol. 1, No. 108, 22 septembre 1977<br>page 3803E77<br>& JP - A - 52 - 41550<br>-- | 1 |
| A | DE - B2 - 1 614 361 (REACTOR CENTRUM NEDERLAND)<br>* colonne 1, lignes 46 à 53 *<br>-- | 3,4 |
| A | US - A - 4 150 289 (MAGNAFLUX CORP.)<br>* colonne 2, lignes 21 à 32 *<br>---- | |

**CLASSEMENT DE LA DEMANDE (Int. Cl. 3)**

G 01 B 15/02
G 21 F 5/02

**DOMAINES TECHNIQUES RECHERCHES (Int. Cl. 3)**

G 01 B 15/00
G 21 F 5/00
G 21 F 7/00

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E. document de brevet antérieur, mais publié à la date de dépôt ou après cette date
D cité dans la demande
L cité pour d'autres raisons

& membre de la même famille, document correspondant

Le present rapport de recherche a été etabli pour toutes les revendications

| Lieu de la recherche | Date d'achevement de la recherche | Examinateur |
|---|---|---|
| Berlin | 12-03-1982 | BOTTERILL |

OEB Form 1503.1  06.78